# EUROPEAN PATENT APPLICATION

(11) **EP 4 570 605 A1**
(43) Date of publication of application: **18.06.2025**
(21) Application number: 24219829.9
(22) Date of filing: 13.12.2024
(51) Int. Cl.: B60T 13/74, F16D 55/226, F16D 65/18, H02K 7/116, F16D 121/24, F16D 125/40, F16D 125/48, F16D 125/50

(54) **ELECTRO-MECHANICAL BRAKE APPARATUS WITH OFFSET TRANSMISSION SHAFT OF REDUCER, SYSTEM, AND VEHICLE**

(30) Priority: 14.12.2023 CN 202311723256
(71) Applicant: Huawei Digital Power Technologies Co., Ltd., Shenzhen, Guangdong 518043 (CN)
(72) Inventor: MAO, Yan, Shenzhen, 518043 (CN); NI, Hui, Shenzhen, 518043 (CN)
(74) Representative: Gill Jennings & Every LLP

(57) **Abstract**

This application provides an electro-mechanical brake apparatus with an offset transmission shaft of a reducer, a system, and a vehicle. The electro-mechanical brake apparatus is configured to be fastened to a brake caliper and drive a friction plate to brake a wheel. The electro-mechanical brake apparatus includes a brake motor and the reducer. The brake motor includes a rotor and a stator. The reducer includes the transmission shaft and a planetary gear set. An axis of the transmission shaft is offset to an axis of the rotor along a radial direction of the brake motor, the rotor is configured to drive the transmission shaft to rotate around the axis of the rotor, the transmission shaft is configured to drive, through a planet gear of the planetary gear set, a sun gear of the planetary gear set to rotate, and the sun gear is configured to drive the friction plate through a feed mechanism. In this application, the electro-mechanical brake apparatus uses the rotor to form a structure similar to a planet carrier in the planetary gear set of the reducer, to implement integral integration of the brake motor and the reducer. This reduces an axial size of the electro-mechanical brake apparatus, and implements miniaturization of the electro-mechanical brake apparatus on a premise of ensuring reliable braking of the electro-mechanical brake apparatus.

## Description

### TECHNICAL FIELD

This application relates to the vehicle field, and in particular, to an electro-mechanical brake apparatus with an offset transmission shaft of a reducer, an electro-mechanical brake system, and a vehicle.

### BACKGROUND

An electro-mechanical brake (electro-mechanical brake, EMB) apparatus drives a brake to brake by cooperating a motor with a mechanical feed mechanism. The electro-mechanical brake apparatus is characterized by a simple structure, sensitive response, stable load transfer, no hydraulic pipe, and the like, and has high transfer efficiency. In addition, the electro-mechanical brake apparatus also has a development trend of miniaturization, to adapt to wheel space of a vehicle.

### SUMMARY

This application provides an electro-mechanical brake apparatus with an offset transmission shaft of a reducer, an electro-mechanical brake system, and a vehicle. A planetary gear set of the reducer and a rotor of a brake motor in the electro-mechanical brake apparatus are combined, to reduce an axial size of the electro-mechanical brake apparatus and implement miniaturization of the electro-mechanical brake apparatus. This application specifically includes the following technical solutions.

According to a first aspect, this application provides an electro-mechanical brake apparatus. The electro-mechanical brake apparatus is configured to be fastened to a brake caliper and drive a friction plate to brake a wheel, and the electro-mechanical brake apparatus includes:
a brake motor, where the brake motor includes a rotor and a stator; and
a reducer, where the reducer includes a transmission shaft and a planetary gear set.

An axis of the transmission shaft is offset to an axis of the rotor along a radial direction of the brake motor, the rotor is configured to drive the transmission shaft to rotate around the axis of the rotor, the transmission shaft is configured to drive, through a planet gear of the planetary gear set, a sun gear of the planetary gear set to rotate, and the sun gear is configured to drive the friction plate through a feed mechanism.

In this application, the electro-mechanical brake apparatus drives the reducer through the brake motor, to drive the brake caliper to implement braking. The rotor of the brake motor is configured to connect the transmission shaft of the reducer, and the axis of the transmission shaft is offset relative to the axis of the rotor. In a process in which the stator drives the rotor of the brake motor to rotate, the offset transmission shaft is driven to synchronously rotate around the axis of the rotor. The transmission shaft drives, through the planet gear of the reducer, the sun gear to rotate, to implement power output. In this application, the electro-mechanical brake apparatus uses the rotor to form a structure similar to a planet carrier in the planetary gear set of the reducer, to implement integral integration of the brake motor and the reducer. This reduces a size of the electro-mechanical brake apparatus along an axial direction of the brake motor, and implements miniaturization of the electro-mechanical brake apparatus by reducing an overall volume of the electro-mechanical brake apparatus on a premise of ensuring reliable braking of the electro-mechanical brake apparatus.

In an implementation, the electro-mechanical brake apparatus includes a housing, the housing is adjacently arranged and fastened to the brake caliper along an axial direction of the brake motor, and the housing is configured to fasten the stator.

In this implementation, the electro-mechanical brake apparatus fastens the stator of the brake motor through the housing, and accommodates the rotor and the planetary gear set of the reducer. The electro-mechanical brake apparatus further fastens the brake caliper through the housing, so that power output by the brake motor can be transferred to a side of the brake caliper through the reducer to drive the friction plate.

In an implementation, the stator is configured to accommodate the rotor and the planetary gear set, and the rotor is coaxially arranged with the sun gear of the planetary gear set.

The rotor is configured to rotate around the axis of the rotor, and the sun gear is configured to rotate around an axis of the sun gear.

In this implementation, the rotor of the brake motor and the planetary gear set of the reducer are further at least partially accommodated in a center hole of the stator, to improve an integration level of the electro-mechanical brake apparatus and reduce an axial size.

In an implementation, a thickness size of the stator is greater than a sum of a thickness size of the rotor and a thickness size of the planetary gear set along an axial direction of the stator.

In this implementation, the rotor of the brake motor and the planetary gear set of the reducer are completely accommodated in the center hole of the stator.

In an implementation, a sum of an offset distance between the axis of the transmission shaft and the axis of the rotor and a radius of the planet gear is greater than an inner diameter of an iron core of the stator and less than an inner diameter of a winding of the stator along the radial direction of the brake motor, and the iron core of the stator and the planet gear are adjacently arranged along the axial direction of the brake motor.

In this implementation, a part of the planet gear exceeds an outer diameter of the rotor along the radial direction of the brake motor, and the rotor is disposed to be aligned with the iron core of the stator, to ensure that a reliable working gap is formed between an outer circumferential surface of the rotor and an inner circumferential surface of the iron core of the stator. The planet gear and the iron core of the stator are adjacently arranged, so that the planet gear can revolve around the axis of the rotor in an inner circumferential surface of the winding. A structure of the electro-mechanical brake apparatus is more compact.

In an implementation, the rotor includes an iron core of the rotor and a plurality of permanent magnets.

An outer circumferential surface of the iron core of the rotor is configured to fasten the plurality of permanent magnets, and the plurality of permanent magnets are arranged at intervals along a circumferential direction of the iron core of the rotor.

The iron core of the rotor is configured to be in transmission connection to the transmission shaft.

In this implementation, the rotor can be implemented using surface-mounted magnetic sheets, to reduce a radial size of the rotor.

In an implementation, the iron core of the rotor includes an inner ring and an outer ring, the outer ring is coaxially fastened to and sleeved on the inner ring, and the outer ring is configured to be in transmission connection to the transmission shaft.

A size of the inner ring is less than a size of the outer ring along an axial direction of the rotor.

A size of the inner ring is less than a size of the outer ring along a radial direction of the rotor.

In this implementation, the outer ring of the rotor has a larger size along the axial direction of the brake motor. This helps increase an area of the permanent magnet and improve output power of the brake motor. An increase of an axial size of the outer ring further facilitates transmission connection to the transmission shaft.

In an implementation, the iron core of the rotor includes an eccentric hole, and the eccentric hole is used to accommodate a part of the transmission shaft.

An axis of the eccentric hole is parallel to and offset to an axis of the iron core of the rotor along the radial direction of the brake motor.

In this implementation, a structure of the eccentric hole is disposed, so that a transmission connection between the transmission shaft and the rotor is facilitated. One end of the transmission shaft can extend into the eccentric hole, and the other end of the transmission shaft is configured to connect the planet gear of the reducer.

In an implementation, the eccentric hole penetrates the iron core of the rotor along the axial direction of the brake motor.

Along the axial direction of the brake motor, the transmission shaft penetrates the eccentric hole, and a part of the transmission shaft protrudes from the eccentric hole.

In this implementation, the eccentric hole that penetrates the iron core of the rotor facilitates processing and manufacturing of the iron core of the rotor. At least one end of the transmission shaft protrudes from the eccentric hole, to facilitate transmission connection to the planet gear.

In an implementation, the iron core of the rotor includes two end faces, and the two end faces face away from each other along the axial direction of the brake motor.

One of the end faces faces the brake caliper, and the other end face faces away from the brake caliper.

The one end face includes a plurality of eccentric holes, the plurality of eccentric holes are arranged at intervals along the circumferential direction of the iron core of the rotor, and each eccentric hole is used to accommodate one transmission shaft.

In this implementation, the plurality of eccentric holes may be used to accommodate a plurality of transmission shafts, the plurality of transmission shafts each are connected to one planet gear, and a plurality of planet gears may rotate synchronously around the axis of the rotor and drive a same sun gear to rotate to output power.

In an implementation, each of the transmission shafts is configured to be fastened to one planet gear of the planetary gear set and the rotor.

In this implementation, the transmission shaft is fastened to the rotor and the planet gear, and the planet gear revolves only relative to the axis of the rotor to drive the sun gear to rotate and output power.

In an implementation, the reducer includes two planet gears, the two planet gears are respectively arranged on two sides of the rotor along the axial direction of the brake motor, and the two planet gears are rotatably connected to the rotor through a same transmission shaft.

In this implementation, the transmission shaft is fastened to the two planet gears. In a process in which the two planet gears synchronously revolve relative to the axis of the rotor, the two planet gears may also autorotate relative to an eccentric hole, and reduction ratios of the two planet gears are coupled to drive the sun gear to rotate and output power.

In an implementation, the planetary gear set of the reducer includes an idler gear, the idler gear and the sun gear are respectively arranged on the two sides of the rotor along the axial direction of the brake motor, and the two planet gears are respectively configured to be in transmission connection to the idler gear and the sun gear.

In this implementation, the idler gear is configured to mesh with one planet gear to form a first-stage reduction ratio. After the reduction ratio is coupled to the other planet gear, the sun gear is driven to rotate, so that an overall reduction ratio of the reducer can be increased.

In an implementation, the feed mechanism includes a lead screw and a screw nut.

The lead screw is configured to rotate with the sun gear and drive the screw nut to move along an axial direction of the lead screw.

The screw nut is configured to drive the friction plate towards or away from a brake disc of a vehicle.

In this implementation, through cooperation between the lead screw and the screw nut, rotation motion that is of the reducer and that is output by the sun gear is converted into linear motion, and the screw nut pushes the friction plate and drives the brake caliper to implement braking.

In an implementation, the electro-mechanical brake apparatus includes a circuit board, the circuit board is configured to fasten a drive circuit, and the drive circuit is configured to drive the brake motor.

Along the axial direction of the brake motor, the circuit board, the planetary gear set of the reducer, and the brake caliper are arranged in sequence, and the circuit board and the brake caliper are located on opposite sides of the planetary gear set.

In this implementation, the electro-mechanical brake apparatus may further integrate the circuit board, and the circuit board is disposed on a side that is of the planetary gear set and that is away from the brake caliper. A distance between the circuit board and the brake motor and a distance between the circuit board and the reducer are close. This facilitates line arrangement in the electro-mechanical brake apparatus.

In an implementation, a plane direction of the circuit board is perpendicular to the axial direction of the brake motor.

In an implementation, the electro-mechanical brake apparatus includes a position sensor, where the position sensor is configured to detect an angle of rotation of the brake motor, and the position sensor includes a stator and a rotor.

The circuit board is configured to fasten the stator of the position sensor.

A motor shaft of the brake motor is configured to be in coaxial transmission with the rotor of the position sensor.

In this implementation, the electro-mechanical brake apparatus detects the angle of rotation of the brake motor through the position sensor, and further controls thrust for driving the friction plate by the electro-mechanical brake apparatus, to control braking force of the vehicle.

In an implementation, the stator of the position sensor is provided with an inner hole, an axis of the inner hole of the stator of the position sensor coincides with an axis of the brake motor, the motor shaft extends towards the circuit board, and the inner hole of the stator of the position sensor is used to at least partially accommodate the rotor of the position sensor.

In this implementation, an extension section is disposed on one side of the motor shaft to fasten the rotor of the position sensor, to simplify an internal structure of the electro-mechanical brake apparatus, and enable internal space of the electro-mechanical brake apparatus to be more compact.

In an implementation, the electro-mechanical brake apparatus includes a locking mechanism, and the locking mechanism is configured to lock or release the motor shaft.

The locking mechanism and an input shaft are coaxially arranged, and the locking mechanism is configured to lock or release an outer circumferential surface of the motor shaft.

Alternatively, the locking mechanism is arranged along the axial direction of the brake motor on a side that is of the motor shaft and that is away from the brake caliper, and the locking mechanism is configured to lock or release an end part of the motor shaft.

In this implementation, the locking mechanism and the motor shaft may cooperate to lock or release the brake motor, to implement a parking function of the electro-mechanical brake apparatus.

In an implementation, the locking mechanism includes a shaft sleeve, an electromagnetic coil, and an axial displacement part, the shaft sleeve is configured to be fastened on the outer circumferential surface of the motor shaft, the electromagnetic coil is sleeved outside the shaft sleeve, the circuit board is configured to fasten a control circuit of the electromagnetic coil, the control circuit is configured to control the electromagnetic coil to be on or off, and the electromagnetic coil is configured to drive the axial displacement part to slide towards or away from the shaft sleeve to lock or release the motor shaft.

In this implementation, the locking mechanism and the motor shaft are coaxially sleeved, and the locking mechanism controls locking of the brake motor through the shaft sleeve fastened to the motor shaft.

In an implementation, the locking mechanism includes a clutch and a locking motor, the circuit board is configured to fasten a control circuit of the locking motor, the control circuit of the locking motor is configured to output an alternating current to drive the locking motor, and the locking motor is configured to control the clutch to lock or release the end part of the shaft motor.

In this implementation, the locking mechanism is fastened to the housing or the circuit board and is disposed corresponding to the end part of the motor shaft, and the locking mechanism controls locking of the brake motor by locking or releasing the end part of the motor shaft.

According to a second aspect, this application provides an electro-mechanical brake system, including a brake caliper, a friction plate, and the electro-mechanical brake apparatus according to any one of the foregoing implementations. The brake caliper is configured to install the friction plate and the electro-mechanical brake apparatus, and the electro-mechanical brake apparatus is configured to drive the friction plate towards or away from a brake disc of a vehicle.

According to a third aspect, this application provides a vehicle, including a brake pedal, a wheel, and the electro-mechanical brake system.

The brake pedal is configured to control at least one electro-mechanical brake system to drive a friction plate towards or away from a brake disc of the wheel.

Because the electro-mechanical brake system provided in the second aspect of this application and the vehicle provided in the third aspect use the electro-mechanical brake apparatus, on a premise of implementing reliable braking, a volume is controlled, and this can adapt to wheel space.

### BRIEF DESCRIPTION OF DRAWINGS

To describe technical solutions in this application more clearly, the following briefly describes accompanying drawings for describing implementations. Clearly, the accompanying drawings in the following descriptions show merely some implementations of this application, and a person of ordinary skill in the art may still derive other drawings from these accompanying drawings without creative efforts.
FIG. 1 is a diagram of an appearance structure of a vehicle at a wheel according to an embodiment of this application;
FIG. 2 is a diagram of a sectional structure of a vehicle at a wheel according to an embodiment of this application;
FIG. 3 is a diagram of a sectional structure of an electro-mechanical brake apparatus according to an embodiment of this application;
FIG. 4 is a diagram of a sectional structure of a brake caliper in an electro-mechanical brake apparatus according to an embodiment of this application;
FIG. 5 is a diagram of a sectional structure of a housing in an electro-mechanical brake apparatus according to an embodiment of this application;
FIG. 6 is a diagram of an appearance structure of a housing in an electro-mechanical brake apparatus according to an embodiment of this application;
FIG. 7 is a diagram of a structure of a housing and internal components of the housing in an electro-mechanical brake apparatus after disassembly of the housing according to an embodiment of this application;
FIG. 8 is a diagram of a brief structure of a housing and internal components of an electro-mechanical brake apparatus according to an embodiment of this application;
FIG. 9 is a diagram of a sectional structure of a rotor of a brake motor and a planetary gear set in an electro-mechanical brake apparatus according to an embodiment of this application;
FIG. 10 is a diagram of an exploded structure of a rotor of a brake motor and a planetary gear set in an electro-mechanical brake apparatus according to an embodiment of this application;
FIG. 11 is a diagram of an exploded structure of a rotor of a brake motor and a planetary gear set in an electro-mechanical brake apparatus according to an embodiment of this application;
FIG. 12 is a diagram of a structure of cooperation between a rotor of a brake motor and a planet gear in an electro-mechanical brake apparatus according to an embodiment of this application;
FIG. 13 is a diagram of a structure of cooperation between a rotor of a brake motor and a planet gear in an electro-mechanical brake apparatus according to an embodiment of this application;
FIG. 14 is a diagram of a sectional structure of installing a bearing in a housing of an electro-mechanical brake apparatus according to an embodiment of this application;
FIG. 15 is a diagram of another embodiment of a brief structure of a housing and internal components of an electro-mechanical brake apparatus according to an embodiment of this application;
FIG. 16 is a diagram of an exploded structure of a locking mechanism in an electro-mechanical brake apparatus according to an embodiment of this application; and
FIG. 17 is a diagram of another embodiment of a sectional structure of a locking mechanism in an electro-mechanical brake apparatus according to an embodiment of this application.

### DESCRIPTION OF EMBODIMENTS

The following describes technical solutions in embodiments of this application with reference to accompanying drawings in embodiments of this application. Clearly, the described embodiments are merely some but not all of embodiments of this application. All other embodiments obtained by a person of ordinary skill in the art based on embodiments of this application without creative efforts shall fall within the protection scope of this application.

This application provides an electro-mechanical brake apparatus. The electro-mechanical brake apparatus is configured to be fastened to a brake caliper and drive a friction plate to brake a wheel, and the electro-mechanical brake apparatus includes: a brake motor, where the brake motor includes a rotor and a stator; and a reducer, where the reducer includes a transmission shaft and a planetary gear set. An axis of the transmission shaft is offset to an axis of the rotor along a radial direction of the brake motor, the rotor is configured to drive the transmission shaft to rotate around the axis of the rotor, the transmission shaft is configured to drive, through a planet gear of the planetary gear set, a sun gear of the planetary gear set to rotate, and the sun gear is configured to drive the friction plate through a feed mechanism.

In this application, the electro-mechanical brake apparatus uses the rotor to form a structure similar to a planet carrier in the planetary gear set of the reducer, to implement integral integration of the brake motor and the reducer. This reduces a size of the electro-mechanical brake apparatus along an axial direction of the brake motor, and implements miniaturization of the electro-mechanical brake apparatus by reducing an overall volume of the electro-mechanical brake apparatus on a premise of ensuring reliable braking of the electro-mechanical brake apparatus.

This application provides an electro-mechanical brake system, including a brake caliper, a friction plate, and the electro-mechanical brake apparatus. The brake caliper is configured to install the friction plate and the electro-mechanical brake apparatus, and the electro-mechanical brake apparatus is configured to drive the friction plate towards or away from a brake disc of a vehicle. In this application, the electro-mechanical brake system has a small volume, and this can adapt to wheel space.

This application provides a vehicle, including a brake pedal, a wheel, and the electro-mechanical brake system. The brake pedal is configured to control at least one electro-mechanical brake system to drive a friction plate towards or away from a brake disc of the wheel. In this application, the electro-mechanical brake system of the vehicle has a small volume, and this facilitates internal space arrangement of the vehicle.

In this application, a vehicle includes a wheel and a frame, and the wheel is rotatably connected to the frame to drive the vehicle to travel. In this application, an electro-mechanical brake system is fastened to the frame and is located at the wheel, and the electro-mechanical brake system brakes the wheel through an internal mechanism action.

The vehicle may include a plurality of electro-mechanical brake systems, and each electro-mechanical brake system is disposed corresponding to one wheel. The vehicle further includes a brake pedal, and the brake pedal is configured to control the plurality of electro-mechanical brake systems to drive friction plates towards or away from brake discs of wheels.

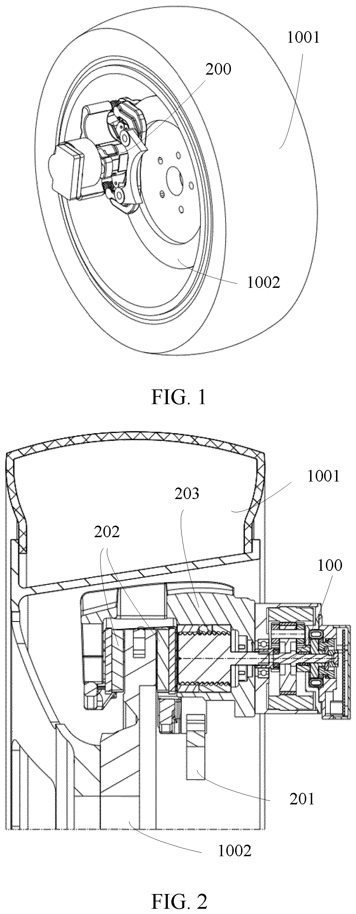

Refer to FIG. 1. FIG. 1 is a diagram of an appearance structure of the vehicle at a wheel according to an embodiment of this application.

As shown in FIG. 1, a brake disc 1002 is disposed on the wheel 1001, and the brake disc 1002 is coaxially fastened to a wheel hub of the wheel 1001. The wheel 1001 rotates relative to the frame, and the brake disc 1002 synchronously rotates with the wheel 1001 relative to the frame. As shown in FIG. 1, an outer diameter of the brake disc 1002 is less than an inner diameter of an inner rim of the wheel, and the brake disc 1002 is accommodated in the inner rim of the wheel 1001.

An electro-mechanical brake system 200 provided in this application is fastened to the frame (which is not shown in the figure). The electro-mechanical brake system 200 at least partially extends into the inner rim of the wheel 1001, and cooperates with the brake disc 1002 to brake the wheel 1001.

Refer to FIG. 2. FIG. 2 is a diagram of a sectional structure of the vehicle at the wheel according to an embodiment of this application.

As shown in FIG. 2, the electro-mechanical brake system 200 in this application includes a caliper support 201, a friction plate 202, a brake caliper 203, and an electro-mechanical brake apparatus 100 provided in this application. The caliper support 201 is configured to be fastened to the frame, the brake caliper 203 is slidably connected to the caliper support 201, and the electro-mechanical brake apparatus 100 is fastened to the brake caliper 203 and synchronously slides with the brake caliper 203 relative to the caliper support 201. In some embodiments, the brake caliper 203 and the caliper support 201 are slidably connected through a through hole and a sliding rod. In other words, one of the through hole and the sliding rod is provided in the brake caliper 203, and the other one of the through hole and the sliding rod is provided in the caliper support 201. Relative sliding between the brake caliper 203 and the caliper support 201 is implemented through axial sliding of the sliding rod in the through hole.

It should be noted that a sliding direction of the brake caliper 203 relative to the caliper support 201 is parallel to an axial direction of the brake disc 1002. In correspondence to the foregoing embodiment of cooperation between the through hole and the sliding rod, an axial direction of the through hole and an axial direction of the sliding rod are both parallel to the axial direction of the brake disc 1002.

The brake caliper 203 is configured to install the friction plate 202 and the electro-mechanical brake apparatus 100. Two friction plates 202 are present, and the two friction plates 202 are respectively arranged on two sides of the brake disc 1002 along the axial direction of the brake disc 1002. The two friction plates 202 respectively face two outer surfaces of the brake disc 1002 that face away from each other. The electro-mechanical brake apparatus 100 is configured to drive the friction plate 202 towards or away from the brake disc 1002 of the vehicle. The electro-mechanical brake apparatus 100 may push, through an internal mechanism action and sliding relative to the caliper support 201, the two friction plates 202 to slide oppositely and be in contact with the two outer surfaces of the brake disc 1002 that face away from each other, to generate friction to brake the brake disc 1002.

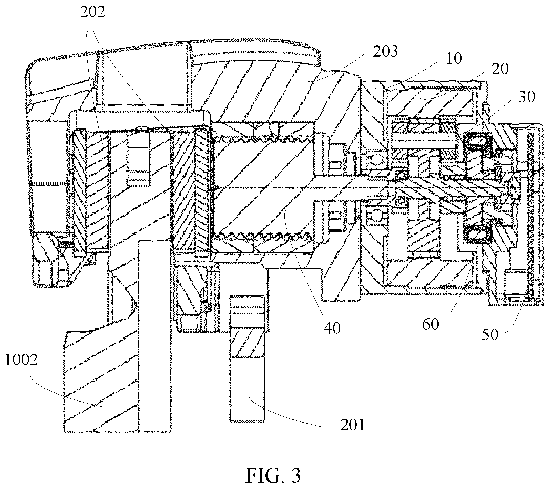

Refer to FIG. 3. FIG. 3 is a diagram of a sectional structure of the electro-mechanical brake apparatus 100 according to an embodiment of this application.

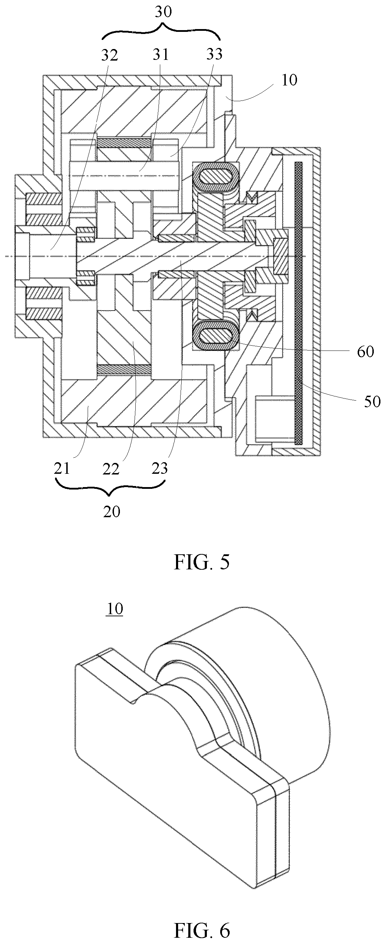

As shown in FIG. 3, the electro-mechanical brake apparatus 100 in this application includes a housing 10, a brake motor 20, a reducer 30, and a feed mechanism 40. The housing 10 is fastened to the brake caliper 203 along an axial direction of the brake motor 20. The housing 10 is configured to fasten a stator 21 of the brake motor 20 (refer to FIG. 5). An inner cavity of the housing 10 is configured to accommodate the stator 21 and a rotor 22 of the brake motor 20 and a planetary gear set 33 of the reducer 30. The brake caliper 203 is configured to at least partially accommodate the feed mechanism 40. The brake caliper 203 is further configured to drive the housing 10 and slide relative to the caliper support 201 along the axial direction of the brake disc 1002. The reducer 30 is configured to be in transmission connection to the feed mechanism 40 and the brake motor 20, and the brake motor 20 is configured to drive the reducer 30 to rotate to push the friction plate 202 and drive the brake caliper 203.

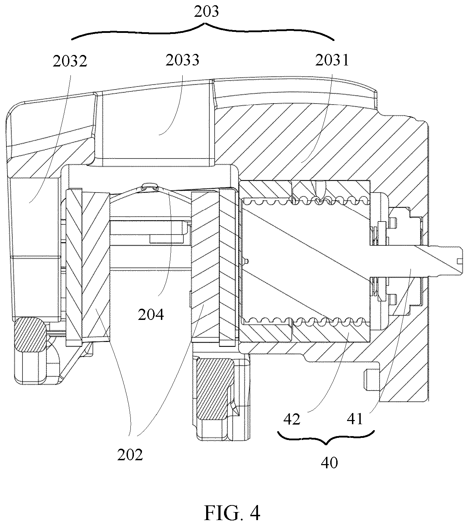

Refer to FIG. 4. FIG. 4 is a diagram of a sectional structure of the brake caliper 203 in the electro-mechanical brake apparatus 100 according to an embodiment of this application.

The brake caliper 203 is roughly U-shaped, and the brake caliper 203 includes a main body part 2031, a pushing part 2032, and a connecting part 2033. The main body part 2031 and the pushing part 2032 are respectively arranged on the two sides of the brake disc 1002 along the axial direction of the brake disc 1002, and the main body part 2031 and the pushing part 2032 are further respectively arranged on two sides of the two friction plates 202 along the axial direction of the brake disc 1002. In other words, the main body part 2031, one friction plate 202, the brake disc 1002, the other friction plate 202, and the pushing part 2032 are sequentially arranged along the axial direction of the brake disc 1002. The connecting part 2033 is located on an outer side of the brake disc 1002 along a radial direction of the brake disc 1002, and the connecting part 2033 is configured to be fastened to the main body part 2031 and the pushing part 2032.

In an embodiment, a friction plate 202 located on a side that is of the brake disc 1002 and that is close to the main body part 2031 is slidably connected to the main body part 2031. In an embodiment, a friction plate 202 located on a side that is of the brake disc 1002 and that is close to the pushing part 2032 is fastened to the pushing part 2032.

The main body part 2031 is further configured to be slidably connected to the caliper support 201. The feed mechanism 40 is at least partially accommodated in an inner cavity of the main body part 2031. The housing 10 is fastened on a side that is of the main body part 2031 and that is away from the pushing part 2032. The feed mechanism 40 is configured to be in transmission connection to the reducer 30, the main body part 2031 and the housing 10 each are provided with an avoidance hole, and the avoidance hole is used to avoid a transmission shaft between the feed mechanism 40 and the reducer 30. In some embodiments, the transmission shaft and an input shaft of the feed mechanism 40 may be of an integral structure, to be specific, the input shaft of the feed mechanism 40 may pass through two avoidance holes and extend into the housing 10 to be in transmission connection to the reducer 30. In some other embodiments, the transmission shaft and an output shaft of the reducer 30 may be of an integral structure, to be specific, the output shaft of the reducer 30 may pass through two avoidance holes and extend into the inner cavity of the main body part 2031 to be in transmission connection to the feed mechanism 40.

The feed mechanism 40 includes a lead screw 41 and a screw nut 42. The screw nut 42 is coaxially sleeved on an outer side of the lead screw 41, and the lead screw 41 is configured to be in coaxial transmission with the output shaft of the reducer 30. The output shaft of the reducer 30 drives the lead screw 41 to rotate, to drive the screw nut 42 to slide. In this case, an end part that is of the lead screw 41 and that faces the reducer 30 may be considered as the input shaft of the feed mechanism 40.

Specifically, threads that cooperate with each other are provided on an outer circumferential surface of the lead screw 41 and an inner circumferential surface of the screw nut 42. When the lead screw 41 is driven by the reducer 30 to rotate along an axis of the lead screw 41, the lead screw 41 may drive the screw nut 42 to slide along the axis of the lead screw 41. On a side that is of the screw nut 42 and that is away from the reducer 30, the screw nut 42, one friction plate 202, and the brake disc 1002 are sequentially arranged along the axis of the lead screw 41. The lead screw 41 drives the screw nut 42 to slide along the axis of the lead screw 41, to drive the friction plate 202 to move relative to the brake disc 1002.

It may be understood that, when the brake motor 20 rotates forward, the reducer 30 drives the lead screw 41 to rotate forward along the axis of the lead screw 41, and the screw nut 42 slides towards the brake disc 1002 along the axis of the lead screw 41 and drives the friction plate 202 to be in contact with the brake disc 1002 to implement braking; when the brake motor 20 rotates in reverse, the reducer 30 drives the lead screw 41 to rotate in reverse along the axis of the lead screw 41, the screw nut 42 slides in a direction away from the brake disc 1002 along the axis of the lead screw 41, and the friction plate 202 is released from the brake disc 1002.

In some embodiments, a separation spring 204 is further disposed between the two friction plates 202. Two opposite ends of the separation spring 204 respectively abut against the two friction plates 202. The separation spring 204 is configured to provide elastic force for the two friction plates 202 to get away from each other along an axial direction of the lead screw 41, to ensure that after the screw nut 42 slides away from the brake disc 1002, the two friction plates 202 are separately released from contact with the brake disc 1002.

In some embodiments, a ball (not shown in the figure) may be further disposed between the lead screw 41 and the screw nut 42. A plurality of balls are present, and the balls abut between a thread on the outer circumferential surface of the lead screw 41 and a thread on the inner circumferential surface of the screw nut 42. The ball is configured to reduce friction between the lead screw 41 and the screw nut 42, and improve transmission efficiency of the electro-mechanical brake apparatus 100.

Refer to FIG. 5. FIG. 5 is a diagram of a sectional structure of the housing 10 in the electro-mechanical brake apparatus 100 according to an embodiment of this application.

As shown in FIG. 5, the brake motor 20 includes the stator 21 and the rotor 22. The stator 21 and the rotor 22 are coaxially arranged along a radial direction of the brake motor 20. The stator 21 is configured to drive the rotor 22 to rotate, to output power. In some embodiments, the brake motor 20 may further include a motor shaft 23, and the motor shaft 23 is coaxially fastened to the rotor 22.

In the embodiment shown in FIG. 5, the brake motor 20 is an inner rotor motor, the stator 21 is coaxially sleeved on an outer side of the rotor 22, and the rotor 22 is located in a center hole of the stator 21. In this case, the housing 10 is configured to fasten the stator 21, and the stator 21 drives the rotor 22 to rotate in the center hole of the stator 21. In some other embodiments, the brake motor 20 may be an outer rotor motor, the rotor 22 is coaxially sleeved on an outer side of the stator 21, and the stator 21 is located in a center hole of the rotor 22. In this case, a structure of a support cylinder is disposed in the housing 10, the support cylinder is configured to fasten the stator 21, and the stator 21 drives the rotor 22 to rotate on the outer side of the stator 21.

The reducer 30 includes a transmission shaft 31, the output shaft 32, and the planetary gear set 33. The transmission shaft 31 is in transmission connection to the output shaft 32 through the planetary gear set 33. The transmission shaft 31 is configured to be in transmission connection to the brake motor 20, and the output shaft 32 is configured to be in transmission connection to the feed mechanism 40. Specifically, the transmission shaft 31 of the reducer 30 is configured to be in transmission with the rotor 22 of the brake motor 20. The output shaft 32 of the reducer 30 is configured to be in coaxial transmission with the lead screw 41 of the feed mechanism 40.

The planetary gear set 33 is configured to adjust a rotation speed. In embodiments of this application, an axis of the transmission shaft 31 in the reducer 30 is offset to an axis of the output shaft 32. A structure of the planetary gear set 33 is compact, and can provide a large reduction ratio. This facilitates miniaturization of the electro-mechanical brake apparatus 100 in this application.

The following specifically describes a working procedure of the electro-mechanical brake system 200 in this application in a vehicle braking process.

When braking is required for the vehicle, the stator 21 of the brake motor 20 drives the rotor 22 to rotate forward. The rotor 22 drives the transmission shaft 31 that is of the reducer 30 and that is in transmission connection to the rotor 22 to synchronously rotate forward. The transmission shaft 31 drives, through the planetary gear set 33, the output shaft 32 to rotate forward. The output shaft 32 drives the lead screw 41 in the feed mechanism 40 that is in transmission connection to the output shaft 32 to synchronously rotate forward. The feed mechanism 40 is configured to convert a rotation action of the lead screw 41 into a sliding action of the screw nut 42, in other words, the lead screw 41 drives the screw nut 42 to slide along the axis of the lead screw 41. A sliding direction of the screw nut 42 is a direction towards the brake disc 1002. The screw nut 42 pushes a friction plate 202 to move towards the brake disc 1002, and enables the friction plate 202 to be in contact with the brake disc 1002 to generate friction.

After the friction plate 202 that is close to the screw nut 42 is in contact with and abuts against the brake disc 1002, the stator 21 of the brake motor 20 continues to drive the rotor 22 to rotate forward, and the screw nut 42 continues to slide along the axial direction of the lead screw 41 through a same power transfer path. Because a position of the brake disc 1002 is fixed, the screw nut 42, the friction plate 202, and the brake disc 1002 sequentially abut against each other. The screw nut 42 receives reverse abutting thrust from the brake disc 1002. An axial sliding action of the screw nut 42 relative to the lead screw 41 is converted into a sliding action of the brake caliper 203 being reversely pushed by the screw nut 42 relative to the caliper support 201. In other words, after the friction plate 202 that is close to the screw nut 42 is in contact with and abuts against the brake disc 1002, an axial size of the feed mechanism 40 further increases under an action of the brake motor 20, to reversely push the brake caliper 203 to slide relative to the caliper support 201 in a direction towards the housing 10. The housing 10 synchronously slides with the brake caliper 203 in a direction away from the brake disc 1002.

Sliding of the brake caliper 203 in the direction towards the housing 10 may drive the pushing part 2032 to synchronously slide in a direction towards the housing 10. Because the pushing part 2032 is located on a side that is of the brake disc 1002 and that is away from the housing 10, a sliding direction of the pushing part 2032 is a direction towards the brake disc 1002. In other words, after the friction plate 202 that is close to the screw nut 42 is in contact with and abuts against the brake disc 1002, the feed mechanism 40 further drives the pushing part 2032 to slide towards the brake disc 1002. In this way, the pushing part 2032 drives the other friction plate 202 located on the same side to synchronously slide towards the brake disc 1002, and enables the other friction plate 202 to be in contact with the brake disc 1002 to generate friction.

Therefore, through an internal mechanism action of the electro-mechanical brake apparatus 100, the friction plates 202 located on the two sides of the brake disc 1002 may be driven to slide oppositely and be respectively in contact with the two outer surfaces of the brake disc 1002 that face away from each other, to generate the friction to brake the brake disc 1002 and implement braking of the vehicle.

After the braking is completed, the stator of the brake motor 20 drives the rotor 22 to rotate in reverse. The rotor 22 sequentially drives the transmission shaft 31 and the output shaft 32 of the reducer 30 and the lead screw 41 of the feed mechanism 40 to synchronously rotate in reverse. Reverse rotation of the lead screw 41 may drive the screw nut 42 to slide in the direction away from the brake disc 1002, so that a spacing between the two friction plates 202 increases, the two friction plates 202 are separately released from contact with the brake disc 1002 under an action of the separation spring 204, and the wheel 1001 continues to rotate and drives the vehicle to travel.

In some embodiments, a return spring (not shown in the figure) may also be disposed between the brake caliper 203 and the caliper support 201. The return spring is configured to drive the brake caliper 203 to slide relative to the caliper support 201 in a direction away from the housing 10, to drive the pushing part 2032 to slide in a direction away from the brake disc 1002, so as to ensure that the two friction plates 202 are separately and reliably separated from the brake disc 1002.

Therefore, after the braking is completed, through an internal mechanism action of the electro-mechanical brake apparatus 100, the friction plates 202 located on the two sides of the brake disc 1002 may be driven to slide oppositely and be respectively released from contact with the two outer surfaces of the brake disc 1002 that face away from each other, so that the wheel 1001 continues to rotate and drives the vehicle to travel.

In an embodiment, the electro-mechanical brake apparatus 100 includes a circuit board 50. The circuit board 50 is configured to fasten a drive circuit, and the drive circuit is configured to drive the brake motor 20. The circuit board 50 may be accommodated in the inner cavity of the housing 10 together with the brake motor 20, so that a signal transmission distance from the drive circuit to the brake motor 20 can be shortened, and internal line arrangement of the electro-mechanical brake apparatus 100 can be simplified. In addition, the housing 10 may provide reliable sealing protection effect for the circuit board 50.

In an embodiment, the electro-mechanical brake apparatus 100 includes a position sensor. The position sensor is configured to detect an angle of rotation of the brake motor 20, and further adjust braking force of the electro-mechanical brake apparatus 100. The position sensor includes a stator and a rotor. The stator of the position sensor may be fastened to the housing 10, and the rotor of the position sensor may be in coaxial transmission with the motor shaft 23 of the brake motor 20 or the transmission shaft 31 of the reducer 30. The stator of the position sensor may be directly fastened to the housing 10, or may be fastened to the circuit board 50 and indirectly fastened to the housing 10 through the circuit board 50. The rotor of the position sensor may be in coaxial transmission with the motor shaft 23 of the brake motor 20 or the output shaft 32 of the reducer 30.

Through cooperation between the stator and the rotor of the position sensor, an angle of rotation of the motor shaft 23 of the brake motor 20 or the output shaft 32 of the reducer 30 in the inner cavity of the housing 10 may be detected. The position sensor may be further in communication connection to the drive circuit on the circuit board 50. The drive circuit receives an angle signal detected by the position sensor, calculates an angle of rotation of the rotor 22 in the brake motor 20, and adjusts the braking force of the electro-mechanical brake apparatus 100, in other words, adjusts braking intensity of the vehicle.

In an embodiment, the electro-mechanical brake apparatus 100 includes a locking mechanism. The locking mechanism is configured to lock or release the motor shaft 23 of the brake motor 20, or the locking mechanism is configured to lock or release the output shaft 32 of the reducer 30, so that the electro-mechanical brake apparatus 100 in this application further has a parking function. Specifically, a part of the locking mechanism is fastened to the housing 10, and the other part of the locking mechanism acts on the motor shaft 23 of the brake motor 20 or the output shaft 32 of the reducer 30. When the friction plate 202 of the electro-mechanical brake system 200 is attached to the brake disc 1002, the motor shaft 23 of the brake motor 20 or the output shaft 32 of the reducer 30 may be locked through the locking mechanism, to maintain a state in which the friction plate 202 is attached to the brake disc 1002. The brake disc 1002 no longer rotates, and the vehicle enters a parking state.

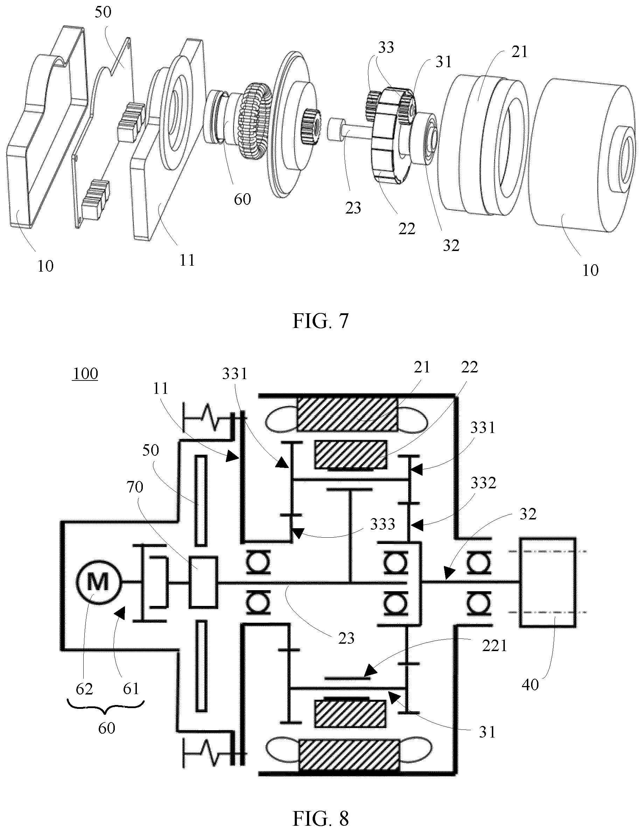

Refer to FIG. 6 to FIG. 8. FIG. 6 is a diagram of an appearance structure of the housing 10 in the electro-mechanical brake apparatus 100 according to this application. FIG. 7 is a diagram of a structure of the housing 10 and internal components of the housing 10 after the housing 10 is disassembled. FIG. 8 is a diagram of a brief structure of the housing 10 and internal components of the housing 10.

For the electro-mechanical brake apparatus 100 in this application, the housing 10 is configured to accommodate the stator 21 and the rotor 22 of the brake motor 20, and the planetary gear set 33 of the reducer 30. In the embodiments shown in the figures, the housing 10 is further configured to accommodate the circuit board 50 and the locking mechanism 60. The housing 10 includes a partition plate 11, the stator 21 and the rotor 22 of the brake motor 20 and the planetary gear set 33 of the reducer 30 are located on one side of the partition plate 11, and the circuit board 50 is located on the other side of the partition plate 11. The circuit board 50 is equipped with the drive circuit, the brake motor 20 and the reducer 30 may include oil, and the oil is used to implement a cooling function and/or a lubrication function. Therefore, the partition plate 11 is spaced between the circuit board 50 and the brake motor 20 and the planetary gear set 33, to form sealing protection for the circuit board 50.

In the embodiments shown in the figures, the locking mechanism 60 and the circuit board 50 are located on a same side of the partition plate 11. In some other embodiments, the locking mechanism 60 may alternatively be located on a side that is of the partition plate 11 and that is away from the circuit board 50. A position of the locking mechanism 60 may be correspondingly set based on a specific structure and spatial arrangement of the locking mechanism 60.

In the embodiments shown in the figures, the brake motor 20 is an inner rotor motor, to be specific, the stator 21 is coaxially sleeved on the outer side of the rotor 22, and the housing 10 is configured to fasten the stator 21. The rotor 22 includes an eccentric hole 221, and an axis of the eccentric hole 221 is offset relative to an axis of the rotor 22. In this application, the transmission shaft 31 in the reducer 30 of the electro-mechanical brake apparatus 100 is at least partially embedded in the eccentric hole 221 of the rotor 22, in other words, the axis of the transmission shaft 31 is offset to the axis of the rotor 22 along the radial direction of the brake motor 20. The transmission shaft 31 is configured to be in transmission connection to a planet gear 331 in the planetary gear set 33.

Therefore, in this application, in the electro-mechanical brake apparatus 100, the rotor 22 is configured to drive the transmission shaft 31 to rotate around the axis of the rotor 22 along the radial direction of the brake motor 20. The transmission shaft 31 is configured to drive, through the planet gear 331 of the planetary gear set 33, a sun gear 332 of the planetary gear set 33 to rotate, and the sun gear 332 is configured to drive the friction plate 202 through the feed mechanism 40.

In this structure, the rotor 22 plays a role similar to a planet carrier in the planetary gear set 33, drives the planet gear 331 to rotate around the sun gear 332, and drives the sun gear 332 to drive the friction plate 202 through the feed mechanism 40. The brake motor 20 and the reducer 30 are integrally integrated, and a size of the electro-mechanical brake apparatus 100 along the axial direction of the brake motor 20 is reduced. Miniaturization of the electro-mechanical brake apparatus 100 is implemented on a premise of ensuring reliable braking of the electro-mechanical brake apparatus 100.

It may be understood that, when the brake motor is an outer rotor motor, to be specific, the rotor 22 is coaxially sleeved on the outer side of the stator 21, the transmission shaft 31 of the reducer 30 may be at least partially embedded in the eccentric hole 221 of the rotor 22, and effect that the rotor 22 drives the transmission shaft 31 to rotate around the axis of the rotor 22 may also be achieved.

In another aspect, the planetary gear set 33 may further include a multi-stage planet gear system. When the rotor 22 drives the transmission shaft 31 to drive a planet gear 331 of a 1^{st} stage to rotate and therefore drive a sun gear 332 of the same stage to rotate, the sun gear 332 may further drive a planet gear 331 of a next stage to rotate, and drive, through a sun gear 332 of the next stage, the feed mechanism 40 to drive the friction plate 202. In this case, the multi-stage planet gear system may be located between the rotor 22 and the feed mechanism 40 along the axial direction of the brake motor 20.

Refer to FIG. 5. In an embodiment, the stator 21 of the brake motor 20 is configured to accommodate the rotor 22 and the planetary gear set 33. The rotor 22 of the brake motor 20 and the planetary gear set 33 of the reducer 30 are further at least partially accommodated in the center hole of the stator 21. As shown in FIG. 5, a thickness size of the stator 21 is greater than a sum of a thickness size of the rotor 22 and a thickness size of the planetary gear set 33 along an axial direction of the stator 21. In this case, the center hole of the stator 21 completely accommodates the rotor 22 and the planetary gear set 33. This improves an integration degree of the electro-mechanical brake apparatus 100, and can further reduce an axial size.

The rotor 22 is coaxially arranged with the sun gear 332 of the planetary gear set 33. In other words, the axis of the rotor 22 coincides with an axis of the sun gear 332. In this case, the rotor 22 is configured to rotate around the axis of the rotor 22, and the sun gear 332 is configured to rotate around the axis of the sun gear 332. Rotation axes of the rotor 22 and the sun gear 332 coincide with each other, to form a structure of a coaxial reducer. It may be understood that, a rotation axis of the feed mechanism 40 may also coincide with the axes of the rotor 22 and the sun gear 332. In this way, a structure of the electro-mechanical brake apparatus 100 is more compact, and this facilitates miniaturization.

In an embodiment, a sum of a radius of the planet gear 331 and an offset distance between the axis of the transmission shaft 31 and the axis of the rotor 22 is greater than an inner diameter of an iron core of the stator 21 and less than an inner diameter of a winding of the stator 21 along the radial direction of the brake motor 20. The iron core of the stator 21 and the planet gear 331 are adjacently arranged along the axial direction of the brake motor 20.

Specifically, a winding of the brake motor 20 is wound around the iron core, and extends from two ends of the iron core along the axial direction of the stator 21. A fit clearance needs to be formed between the iron core of the stator 21 and an iron core of the rotor 22, to ensure that the stator 21 drives the rotor 22 to rotate. The planet gear 331 is offset behind the rotor 22 due to a transmission ratio design. A sum of an offset distance and the radius of the planet gear 331 may be greater than the inner diameter of the iron core of the stator 21. Therefore, to ensure the fit clearance between the iron core of the rotor 22 and the iron core of the stator 21, an outer diameter of the iron core of the rotor 22 needs to be increased to avoid interference between the planet gear 331 and the iron core of the stator 21.

In this embodiment, the planet gear 331 is accommodated by using the winding of the stator 21, in other words, the inner diameter of the winding of the stator 21 is greater than the sum of the offset distance of the planet gear 331 and the radius of the planet gear 331. In addition, along the axial direction of the brake motor 20, the iron core of the stator 21 and the planet gear 331 are arranged in a staggered manner, and the iron core of the stator 21 may extend towards the iron core of the rotor 22 to ensure the fit clearance. The winding of the stator 21 is configured to accommodate the planet gear 331, to avoid interference in a process in which the planet gear 331 rotates around the axis of the rotor 22. The structure of the electro-mechanical brake apparatus 100 is more compact, and this facilitates miniaturization and reduces occupied wheel space.

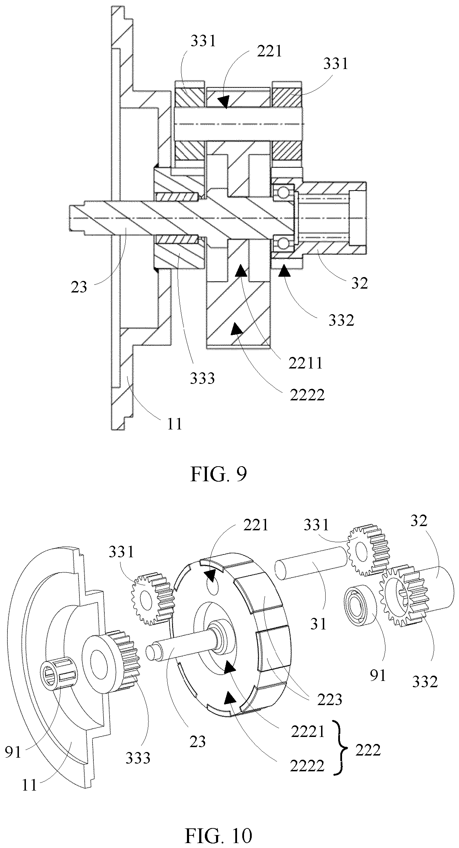

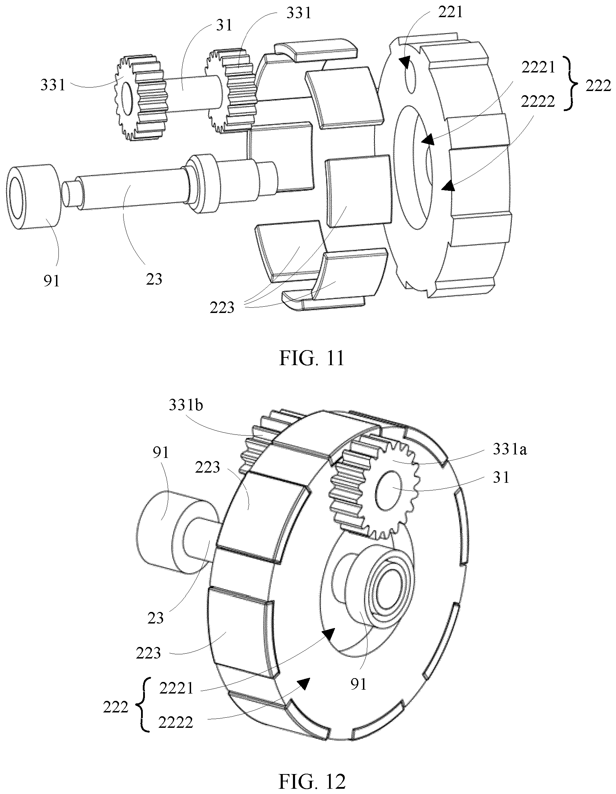

Refer to FIG. 9 to FIG. 11. FIG. 9 is a diagram of a sectional structure of the rotor 22 of the brake motor 20 and the planetary gear set 33 in the electro-mechanical brake apparatus 100 according to this application. FIG. 10 is a diagram of an exploded structure of the rotor 22 of the brake motor 20 and the planetary gear set 33. FIG. 11 is a diagram of an exploded structure of the rotor 22 of the brake motor 20 and the planetary gear set 33.

As shown in FIG. 9 to FIG. 11, in an embodiment, the rotor 22 includes the iron core 222 of the rotor and a plurality of permanent magnets 223. An outer circumferential surface of the iron core 222 of the rotor is configured to fasten the plurality of permanent magnets 223, and the plurality of permanent magnets 223 are arranged at intervals along a circumferential direction of the iron core 222 of the rotor. The iron core 222 of the rotor is further configured to be in transmission connection to the transmission shaft 31 of the reducer 30.

In an embodiment, the outer circumferential surface of the iron core 222 of the rotor is provided with a plurality of hollowed-out regions. The plurality of permanent magnets 223 may be of a sheet shape, and each permanent magnet 223 is embedded in each hollowed-out region to be fastened on the outer circumferential surface of the iron core 222 of the rotor. In some other embodiments, the permanent magnet 223 may alternatively be directly attached to the outer circumferential surface of the iron core 222 of the rotor in a surface-mounted manner. In an embodiment, the plurality of permanent magnets 223 are further evenly distributed along the circumferential direction of the iron core 222 of the rotor, in other words, the permanent magnets 223 are disposed at equal intervals along the circumferential direction of the iron core 222 of the rotor, to ensure that the rotor 22 stably rotates relative to the stator 21.

The rotor 22 in a form of the permanent magnets 223 is easy to manufacture. In addition, a radial size of the rotor 22 can be reduced by controlling a thickness of the permanent magnet 223 and a wall thickness of the iron core 222 of the rotor, and a radial size of the brake motor 20 can be further reduced, to implement miniaturization of the electro-mechanical brake apparatus 100.

It should be noted that as shown in FIG. 9 to FIG. 11, the brake motor 20 is an inner rotor motor. In this case, the outer circumferential surface of the iron core 222 of the rotor faces the stator 21, and the plurality of permanent magnets 223 are surface-mounted to the outer circumferential surface of the iron core 222 of the rotor. When the brake motor 20 is an outer rotor motor, an inner circumferential surface of the iron core 222 of the rotor faces the stator 21, and the plurality of permanent magnets 223 need to be surface-mounted to the inner circumferential surface of the iron core 222 of the rotor, to ensure reliable working of the brake motor 20.

In an embodiment, the iron core 222 of the rotor includes an inner ring 2221 and an outer ring 2222. A size of the inner ring 2221 is less than a size of the outer ring 2222 along a radial direction of the rotor 22. The outer ring 2222 is coaxially fastened to and sleeved on the inner ring 2221. A size of the inner ring 2221 is less than a size of the outer ring 2222 along an axial direction of the rotor 22. The outer ring 2222 is configured to be in transmission connection to the transmission shaft 31 of the reducer 30. In other words, an axial size of the outer ring 2222 of the rotor 22 along the brake motor 20 is greater than an axial size of the inner ring 2221.

Because the permanent magnet 223 is disposed on the outer ring 2222, a larger axial size of the outer ring 2222 helps increase an area of the permanent magnet 223 and improve output power of the brake motor 20. A smaller axial size of the inner ring 2221 facilitates transmission connection between the inner ring 2221 and the motor shaft 23, and facilitates structures such as a bearing disposed on the motor shaft 23.

In an embodiment, the outer ring 2222 is further configured to be in transmission connection to the transmission shaft 31 of the reducer 30. As shown in FIG. 9 to FIG. 11, the eccentric hole 221 of the rotor 22 is provided at the iron core 222 of the rotor (specifically, at the outer ring 2222). As mentioned above, the eccentric hole 221 is configured to accommodate a part of the transmission shaft 31. Therefore, when the axial size of the outer ring 2222 is larger, the transmission shaft 31 can be better accommodated, and the electro-mechanical brake apparatus 100 has higher structural stability.

In an embodiment, the axis of the eccentric hole 221 is parallel to and offset to an axis of the iron core 222 of the rotor along the radial direction of the brake motor 20. Therefore, the axis of the transmission shaft 31 is also parallel to the axis of the iron core 222 of the rotor (that is, the rotor 22). In an embodiment, the eccentric hole 221 penetrates the iron core 222 of the rotor along the axial direction of the brake motor 20, to facilitate manufacturing of the eccentric hole 221.

Correspondingly, along the axial direction of the brake motor 20, the transmission shaft 31 may be inserted into the eccentric hole 221, and a part of the transmission shaft 31 protrudes from the eccentric hole 221 to be in transmission connection to the planet gear 331.

It may be understood that the iron core 222 of the rotor includes two end faces. The two end faces face away from each other along the axial direction of the brake motor 20, one of the end faces faces the brake caliper 203, and the other end face faces away from the brake caliper 203. In this case, the eccentric hole 221 of the rotor 22 is at least provided on an end face that is of the iron core 222 of the rotor and that faces the brake caliper 203. In an embodiment, the end face that is of the iron core 222 of the rotor and that faces the brake caliper 203 is provided with a plurality of eccentric holes 221, the plurality of eccentric holes 221 are arranged at intervals along the circumferential direction of the iron core 222 of the rotor, and each eccentric hole 221 is configured to accommodate one transmission shaft 31.

In this case, a plurality of transmission shafts 31 each may be connected to one planet gear 331, a plurality of planet gears 331 may synchronously rotate around the axis of the rotor 22, and the plurality of planet gears 331 drive a same sun gear 332 to rotate to output power. The plurality of planet gears 331 synchronously rotate around the axis of the rotor 22 (in other words, synchronously rotate around the sun gear 332), so that the sun gear 332 can be better supported. In this way, radial force applied to the sun gear 332 is more even, and this facilitates stable rotation of the sun gear 332.

In an embodiment, the transmission shaft 31 is configured to be fastened to one planet gear 331 of the planetary gear set 33 and the rotor 22. In other words, one end of the transmission shaft 31 is fastened in the eccentric hole 221, and the other end is also fastened to the planet gear 331. In this embodiment, the planet gear 331 connected to the rotor 22 through the transmission shaft 31 is fastened relative to the rotor 22. The planet gear 331 revolves only relative to the axis of the rotor 22, and the planet gear 331 does not autorotate around the axis of the transmission shaft 31. In this case, revolution of the planet gear 331 driven by the rotor 22 can drive the sun gear 332 to rotate around the axis of the sun gear 332 and output power.

It may be understood that, because the transmission shaft 31 is fastened relative to the rotor 22, in some embodiments of the electro-mechanical brake apparatus 100 in this application, a structure of the eccentric hole 221 may not be disposed on the rotor 22, and the transmission shaft 31 and the rotor 22 may be integrally formed or fastened to each other in a welding manner. The transmission shaft 31 and the planet gear 331 fastened to the transmission shaft 31 may also be integrally formed or fastened to each other in the welding manner.

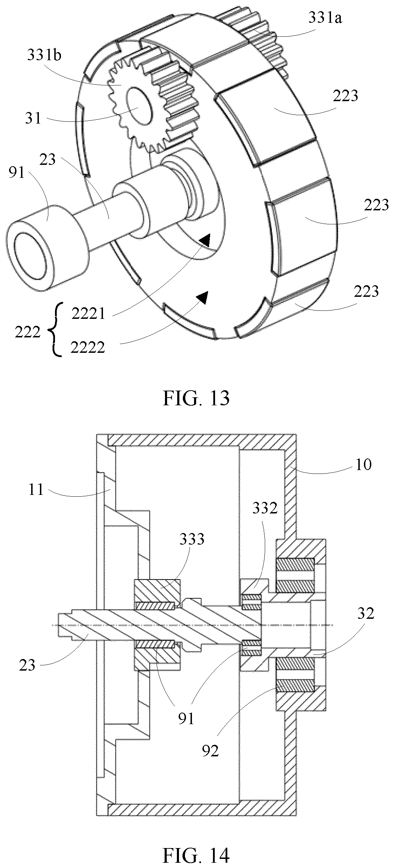

In some other embodiments, as shown in FIG. 12 and FIG. 13, the reducer 30 may include two planet gears 331, the two planet gears 331 may be respectively arranged on two sides of the rotor 22 along the axial direction of the brake motor 20, and the two planet gears 331 are rotatably connected to the rotor 22 through a same transmission shaft 31.

Specifically, for ease of description, in FIG. 12 and FIG. 13, the two planet gears 331 are defined as a front planet gear 331a and a rear planet gear 331b. The front planet gear 331a is located between the rotor 22 and the brake caliper 203, and the front planet gear 331a is configured to be in transmission connection to the sun gear 332. The rear planet gear 331b is located on a side that is of the rotor 22 and that is away from the brake caliper 203, the rear planet gear 331b and the front planet gear 331a are respectively fastened to two ends of the transmission shaft 31, and the transmission shaft 31 passes through the eccentric hole 221 on the rotor 22 and is rotatably connected to the eccentric hole 221.

Therefore, in a process in which the rotor 22 drives the transmission shaft 31 to rotate around the axis of the transmission shaft 31, the two planet gears 331 synchronously revolve around the axis of the rotor 22. The two planet gears 331 also autorotate around the axis of the eccentric hole 221 in cooperation with the transmission shaft 31 and the eccentric hole 221. After transmission ratios formed by the two planet gears 331 in the planetary gear set 33 are coupled, a transmission ratio of the planetary gear set 33 is formed and output to the feed mechanism 40.

In an embodiment, the planetary gear set 33 of the reducer 30 includes an idler gear 333. The idler gear 333 and the sun gear 332 are respectively arranged on the two sides of the rotor 22 along the axial direction of the brake motor 20, and the two planet gears 331 are respectively configured to be in transmission connection to the idler gear 333 and the sun gear 332.

It may be understood that, in this embodiment, the rear planet gear 331b, the rotor 22, and the front planet gear 331a are sequentially arranged along the axial direction of the brake motor 20, and both the rear planet gear 331b and the front planet gear 331a are offset relative to the axis of the rotor 22. The idler gear 333, the rotor 22, and the sun gear 332 are also arranged along the axial direction of the brake motor 20, and axes of the idler gear 333, the rotor 22, and the sun gear 332 coincide with each other. The idler gear 333 is fastened relative to the stator 21 of the brake motor 20, and the idler gear 333 may be fastened to the housing 10. For example, the idler gear 333 may be fastened to a protrusion structure that is of the partition plate 11 and that faces the brake motor 20.

Therefore, along the axial direction of the brake motor 20, the rear planet gear 331b and the idler gear 333 are located on a same side of the rotor 22, and the front planet gear 331a and the sun gear 332 are located on the other side of the rotor 22. The rear planet gear 331b is configured to be in meshing transmission with the idler gear 333, and the front planet gear 331a is configured to be in meshing transmission with the sun gear 332. The rear planet gear 331b and the front planet gear 331a are fastened to each other through the transmission shaft 31.

When the stator 21 of the brake motor 20 drives the rotor 22 to rotate around the axis of the rotor 22, the rotor 22 drives the transmission shaft 31 to rotate around the axis of the rotor 22. The transmission shaft 31 drives the two planet gears 331 to synchronously revolve around the axis of the rotor 22. In this case, the rear planet gear 331b meshes with the fastened idler gear 333, and the rear planet gear 331b autorotates around the axis of the transmission shaft 31 under an action of the idler gear 333. The rear planet gear 331b further drives, through the transmission shaft 31, the front planet gear 331a to synchronously autorotate.

The front planet gear 331a autorotates under driving of the rear planet gear 331b, and synchronously revolves around the axis of the rotor 22. The front planet gear 331a drives the sun gear 332 to autorotate around the axis of the sun gear 332, and an autorotation speed of the sun gear 332 is a speed obtained after reduction ratios of the two planet gears 331 are coupled. In this way, the idler gear 333 is configured to mesh with one planet gear 331 (the rear planet gear 331b) to form a first-stage reduction ratio. After the reduction ratio is coupled to the other planet gear 331 (the front planet gear 331a), the sun gear 332 is driven to rotate, so that an overall reduction ratio of the reducer 30 can be increased.

It may be understood that, in another embodiment, the planetary gear set 33 may alternatively be disposed with a planet gear system of three or more stages. A plurality of sun gears 332 are arranged between the rotor 22 and the brake caliper 203 as described above, to drive the feed mechanism 40. Specifically, the planet gear system may be randomly disposed based on a reduction ratio requirement of the reducer 30.

In the foregoing embodiments, because the planetary gear set 33 of the reducer 30 implements power input through the transmission shaft 31, the transmission shaft 31 of the reducer 30 may be actually understood as an input shaft of the reducer 30. In other words, in the electro-mechanical brake apparatus 100 in this application, the input shaft of the reducer 30 is offset relative to the motor shaft 23 of the brake motor 20, so that the rotor 22 forms a structure similar to a planet carrier, and drives the planetary gear set 33 to rotate around an axis of the motor shaft 23 and implement power output.

Correspondingly, in the solution of the electro-mechanical brake apparatus 100 in this application, the rotor 22 drives, through the transmission shaft 31, the planetary gear set 33 of the reducer 30 to rotate, so that the motor shaft 23 fastened to the rotor 22 does not need to be in transmission connection to the reducer 30. The motor shaft 23 is configured to output a rotation speed of the rotor 22 (in cooperation with the position sensor 70), and implement functions such as parking of the electro-mechanical brake apparatus 100 in cooperation with components such as the locking mechanism 60.

In an embodiment, the brake motor 20 and the reducer 30 may be further disposed with a plurality of bearings. The plurality of bearings are fastened in bearing holes of the housing 10. The plurality of bearings are configured to support the rotor 22, the sun gear 332, and the output shaft 32 of the reducer 30, to ensure that the reducer 30 stably outputs power.

For details, refer to FIG. 14. The motor shaft 23 of the brake motor 20 is coaxially fastened to the rotor 22. The electro-mechanical brake apparatus 100 includes two motor bearings 91 and one output bearing 92. The two motor bearings 91 are respectively arranged on the two sides of the rotor 22 along the axial direction of the brake motor 20. Both the two motor bearings 91 are sleeved on an outer circumferential surface of the motor shaft 23. One motor bearing 91 is embedded in a bearing hole of the idler gear 333, and the other motor bearing 91 is embedded in a bearing hole of the sun gear 332. The output bearing 92 is located on a side that is of the sun gear 332 and that faces the brake caliper 203, the output bearing 92 is sleeved on an outer circumferential surface of the output shaft 32, and the output bearing 92 is embedded in the bearing hole of the housing 10. In the embodiment shown in the figure, the sun gear 332 and the output shaft 32 of the reducer 30 are also of an integral structure, so that an overall volume of the reducer 30 can be reduced.

Therefore, the output bearing 92 may be configured to support rotation of the output shaft 32 and the sun gear 332, and further support rotation of one motor bearing 91 through the sun gear 332. The other motor bearing 91 is supported by the idler gear 333. The motor shaft 23 stably rotates under support of the two motor bearings 91, to ensure stable rotation of the rotor 22.

It may be understood that, in some embodiments, for a structure in which no idler gear 333 is disposed in the planetary gear set 33, the other motor bearing 91 may alternatively be directly embedded in the bearing hole of the housing 10, and may also support stable rotation of the motor shaft 23. All the foregoing solutions can improve transmission efficiency of the electro-mechanical brake apparatus 100.

In an embodiment, at least one bearing in the two motor bearings 91 and the output bearing 92 is implemented using a needle roller bearing. A radial size of the needle roller bearing is smaller, and this facilitates reduction of an overall volume of the electro-mechanical brake apparatus 100.

As mentioned above, the electro-mechanical brake apparatus 100 in this application may include the circuit board 50. In an embodiment, along the axial direction of the brake motor 20, the circuit board 50, the planetary gear set 33 of the reducer 30, and the brake caliper 203 are sequentially arranged, and the circuit board 50 and the brake caliper 203 are located on two opposite sides of the planetary gear set 33.

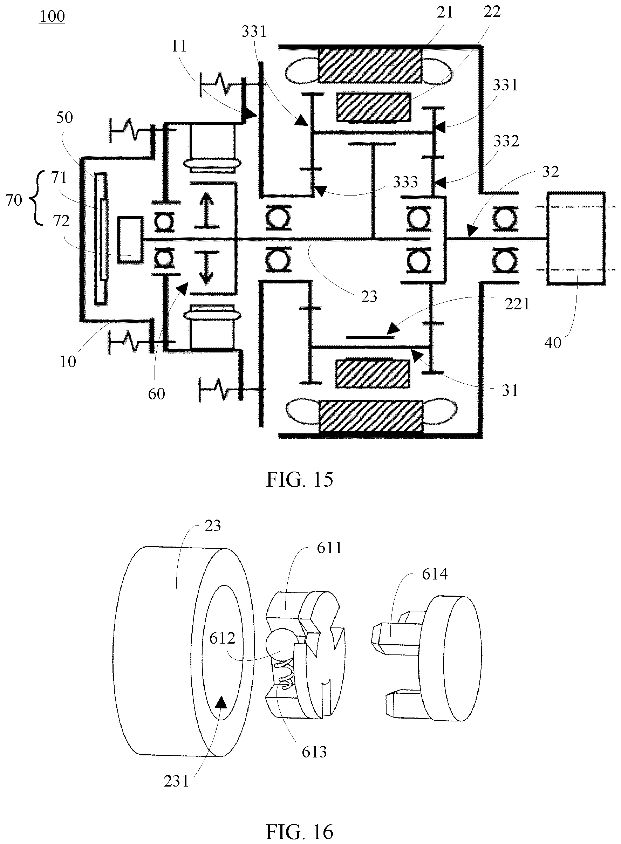

Specifically, as shown in FIG. 15, the circuit board 50 is disposed on a side that is of the planetary gear set 33 and that is away from the brake caliper 203, to avoid opening an avoidance hole on the circuit board 50 to avoid the motor shaft 23 of the brake motor 20. In addition, a distance between the circuit board 50 and the brake motor 20 is close, and this facilitates line arrangement in the electro-mechanical brake apparatus 100. In an embodiment, a plane direction of the circuit board 50 is perpendicular to the axial direction of the brake motor 20, so that the size of the electro-mechanical brake apparatus 100 along the axial direction of the brake motor 20 can be reduced.

Still refer to FIG. 15. FIG. 15 further shows an implementation of the position sensor 70. Specifically, the position sensor 70 of the electro-mechanical brake apparatus 100 includes the stator 71 and the rotor 72. The circuit board 50 is configured to fasten the stator 71 of the position sensor 70, and the motor shaft 23 of the brake motor 20 is configured to be in coaxial transmission with the rotor 72 of the position sensor 70. Specifically, an end part that is of the motor shaft 23 and that faces the circuit board 50 extends towards the circuit board 50, and the rotor 72 of the position sensor 70 may be fastened to the motor shaft 23 and is aligned with the stator 71 of the position sensor 70 fastened to the circuit board 50. The rotor 72 of the position sensor 70 rotates with the motor shaft 23, and the stator 71 of the position sensor 70 is configured to detect an angle of rotation of the rotor 72 of the position sensor.

Based on different working principles of the position sensor 70, a direction in which the stator 71 and the rotor 72 of the position sensor 70 are aligned with each other may be the axial direction of the brake motor 20, or may be the radial direction of the brake motor 20. When the stator 71 and the rotor 72 of the position sensor 70 are aligned along the axial direction of the brake motor 20, the rotor 72 of the position sensor 70 may be fastened to the end part that is of the motor shaft 23 of the brake motor 20 and that faces the circuit board 50, and a gap is reserved between the stator 71 and the rotor 72 of the position sensor 70 along the axial direction of the brake motor 20.

When the stator 71 and the rotor 72 of the position sensor 70 are aligned along the radial direction of the brake motor 20, as shown in FIG. 8, the stator 71 of the position sensor 70 is provided with an inner hole, an axis of the inner hole of the stator 71 of the position sensor 70 coincides with the axis of the brake motor 20, and the motor shaft 23 of the brake motor 20 extends towards the circuit board 50. The end part of the motor shaft 23 passes through the circuit board 50, the rotor 72 of the position sensor 70 is fastened on the outer circumferential surface of the motor shaft 23, and the inner hole of the stator 71 of the position sensor 70 is configured to at least partially accommodate the rotor 72 of the position sensor 70. In this case, a gap is reserved between the stator 71 and the rotor 72 of the position sensor 70 along the radial direction of the brake motor 20.

FIG. 15 further synchronously shows an implementation of the locking mechanism 60. In this implementation, the locking mechanism 60 is arranged along the axial direction of the brake motor 20 on a side that is of the motor shaft 23 and that is away from the brake caliper 203, and the locking mechanism 60 is configured to lock or release the end part of the motor shaft 23. Specifically, the locking mechanism 60 includes a clutch 61 and a locking motor 62 (refer to FIG. 8). The locking motor 62 is fastened in the inner cavity of the housing 10, and the clutch 61 may lock or release the end part of the motor shaft 23 under driving of the locking motor 62. The circuit board 50 may be further configured to fasten a control circuit of the locking motor 62, and the control circuit of the locking motor 62 is configured to output an alternating current to drive the locking motor 62.

Refer to FIG. 16. An inner hole 231 is provided on the end part of the motor shaft 23 of the brake motor 20, and the clutch 61 includes an inner wheel 611, a movable part 612, a spring 613, and an axial moving part 614. The inner wheel 611 is embedded in the inner hole 231, and both the movable part 612 and the spring 613 are accommodated in a groove of the inner wheel 611. One end of the spring 613 abuts against the movable part 612, and the other end abuts against an inner wall of the groove of the inner wheel 611. The spring 613 is configured to push the movable part 612 to move towards the other side of the inner wall of the groove of the inner wheel 611.

The axial moving part 614 slides in the housing 10 under driving of the locking motor 62, and a sliding direction of the axial moving part 614 is parallel to an axial direction of the motor shaft 23. The axial moving part 614 is driven to extend into or exit the inner hole 231 of the motor shaft 23. When the axial moving part 614 extends into the inner hole 231 of the motor shaft 23, the axial moving part 614 abuts against the movable part 612, and drives the movable part 612 to slide towards a side of the spring 613. When the axial moving part 614 exits the inner hole 231 of the motor shaft 23, the axial moving part 614 releases the movable part 612, and the movable part 612 slides towards a side away from the spring 613 under an action of the spring 613.

A groove bottom of the groove of the inner wheel 611 tilts, the movable part 612 switches between two positions, and a radial height of the movable part 612 relative to the inner wheel 611 changes accordingly. When the movable part 612 is located at a position with a higher radial height, the movable part 612 may abut against an inner circumferential surface of the inner hole 231 of the motor shaft 23, and further lock the end part of the motor shaft 23. When the movable part 612 is located at a position with a lower radial height, the movable part 612 releases the inner circumferential surface of the inner hole 231 of the motor shaft 23, and further releases the end part of the motor shaft 23. Therefore, the locking mechanism 60 may lock or release the end part of the motor shaft 23 by controlling the clutch 61 through the locking motor 62, to implement the parking function.

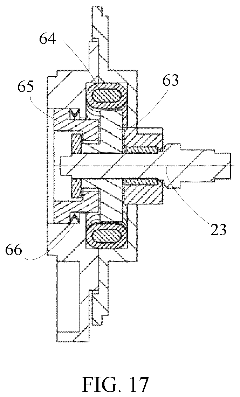

In some other embodiments, the locking mechanism 60 may be coaxially arranged with the motor shaft 23 of the brake motor 20, and the locking mechanism 60 is configured to lock or release the outer circumferential surface of the motor shaft 23 of the brake motor 20. For details, refer to FIG. 15 and FIG. 17. In an embodiment, the locking mechanism 60 includes a shaft sleeve 63, an electromagnetic coil 64, and an axial displacement part 65. The shaft sleeve 63 is configured to be fastened on the outer circumferential surface of the motor shaft 23, the electromagnetic coil 64 is sleeved outside the shaft sleeve 63, and the electromagnetic coil 64 is fastened to the housing 10. The circuit board 50 is configured to fasten a control circuit of the electromagnetic coil 64, and the control circuit of the electromagnetic coil 64 is configured to control the electromagnetic coil 64 to be on or off. The electromagnetic coil 64 is configured to drive the axial displacement part 65 to slide towards or away from the shaft sleeve 63, to lock or release the motor shaft 23.

In this embodiment, the axial displacement part 65 and the shaft sleeve 63 are arranged at intervals along the axial direction of the motor shaft 23. Locking structures that are engaged with each other are disposed between the axial displacement part 65 and the shaft sleeve 63 along the radial direction of the brake motor 20. For example, the shaft sleeve 63 may be provided with an inner hole, and the axial displacement part 65 may partially slide into the inner hole of the shaft sleeve 63 under driving of the electromagnetic coil 64. A part of structure that is of the axial displacement part 65 and that is located outside the inner hole of the shaft sleeve 63 may be secured to the housing 10, and an outer circumferential surface of a part that is of the axial displacement part 65 and that extends into the shaft sleeve 63 is engaged with an inner circumferential surface of the shaft sleeve 63. In this way, the axial displacement part 65 can secure the shaft sleeve 63, and act on the outer circumferential surface of the motor shaft 23 through the shaft sleeve 63, to lock a transmission function of the reducer 30 to implement parking effect.

When the parking state needs to be released, the electromagnetic coil 64 is powered off, and the axial displacement part 65 may exit the inner hole of the shaft sleeve 63 under an action of an extension spring 66, to release the outer circumferential surface of the motor shaft 23 and restore the transmission function of the reducer 30.

In some other embodiments, an inner hole may alternatively be provided on a side that is of the axial displacement part 65 and that faces the shaft sleeve 63, and the axial displacement part 65 slides and is sleeved on an outer side of the shaft sleeve 63. An inner circumferential surface of the inner hole of the axial displacement part 65 is engaged with an outer circumferential surface of the shaft sleeve 63. In this way, the axial displacement part 65 can also secure the shaft sleeve 63, and act on the outer circumferential surface of the motor shaft 23 through the shaft sleeve 63, to lock a transmission function of the reducer 30 to implement parking effect. When the parking state needs to be released, the electromagnetic coil 64 is powered off, and the axial displacement part 65 may slide away from the shaft sleeve 63 under an action of an extension spring 66, to release the outer circumferential surface of the motor shaft 23 and restore the transmission function of the reducer 30.

The extension spring 66 may be implemented using a disc spring, a wave spring, or the like.

Certainly, the foregoing implementations may be separately used or may be combined for application. The foregoing descriptions are implementations of this application. It should be noted that a person of ordinary skill in the art may further make several improvements and embellishments without departing from the principle of this application, and these improvements and embellishments shall fall within the protection scope of this application.

## Claims

1. An electro-mechanical brake apparatus with an offset transmission shaft of a reducer, wherein the electro-mechanical brake apparatus is configured to be fastened to a brake caliper and drive a friction plate to brake a wheel, and the electro-mechanical brake apparatus comprises:
a brake motor, wherein the brake motor comprises a rotor and a stator; and
the reducer, wherein the reducer comprises the transmission shaft and a planetary gear set, wherein
an axis of the transmission shaft is offset to an axis of the rotor along a radial direction of the brake motor, the rotor is configured to drive the transmission shaft to rotate around the axis of the rotor, the transmission shaft is configured to drive, through a planet gear of the planetary gear set, a sun gear of the planetary gear set to rotate, and the sun gear is configured to drive the friction plate through a feed mechanism.

2. The electro-mechanical brake apparatus according to claim 1, wherein the electro-mechanical brake apparatus comprises a housing, the housing is adjacently arranged and fastened to the brake caliper along an axial direction of the brake motor, and the housing is configured to fasten the stator.

3. The electro-mechanical brake apparatus according to claim 1 or 2, wherein the stator is configured to accommodate the rotor and the planetary gear set, and the rotor is coaxially arranged with the sun gear of the planetary gear set, wherein
the rotor is configured to rotate around the axis of the rotor, and the sun gear is configured to rotate around an axis of the sun gear.

4. The electro-mechanical brake apparatus according to any one of claims 1 to 3, wherein a thickness size of the stator is greater than a sum of a thickness size of the rotor and a thickness size of the planetary gear set along an axial direction of the stator.

5. The electro-mechanical brake apparatus according to any one of claims 1 to 4, wherein the rotor comprises an iron core of the rotor and a plurality of permanent magnets, wherein
an outer circumferential surface of the iron core of the rotor is configured to fasten the plurality of permanent magnets, and the plurality of permanent magnets are arranged at intervals along a circumferential direction of the iron core of the rotor; and
the iron core of the rotor is configured to be in transmission connection to the transmission shaft.

6. The electro-mechanical brake apparatus according to claim 5, wherein the iron core of the rotor comprises an inner ring and an outer ring, the outer ring is coaxially fastened to and sleeved on the inner ring, and the outer ring is configured to be in transmission connection to the transmission shaft, wherein
a size of the inner ring is less than a size of the outer ring along an axial direction of the rotor; and
a size of the inner ring is less than a size of the outer ring along a radial direction of the rotor.

7. The electro-mechanical brake apparatus according to claim 5 or 6, wherein the iron core of the rotor comprises an eccentric hole, and the eccentric hole is used to accommodate a part of the transmission shaft, wherein
an axis of the eccentric hole is parallel to and offset to an axis of the iron core of the rotor along the radial direction of the brake motor.

8. The electro-mechanical brake apparatus according to claim 7, wherein the eccentric hole penetrates the iron core of the rotor along the axial direction of the brake motor, wherein
along the axial direction of the brake motor, the transmission shaft penetrates the eccentric hole, and a part of the transmission shaft protrudes from the eccentric hole.

9. The electro-mechanical brake apparatus according to claim 7, wherein the iron core of the rotor comprises two end faces, and the two end faces face away from each other along the axial direction of the brake motor, wherein
one of the end faces faces the brake caliper, and the other end face faces away from the brake caliper; and
the one end face comprises a plurality of eccentric holes, the plurality of eccentric holes are arranged at intervals along the circumferential direction of the iron core of the rotor, and each eccentric hole is used to accommodate one transmission shaft.

10. The electro-mechanical brake apparatus according to claim 9, wherein each of the transmission shafts is configured to be fastened to one planet gear of the planetary gear set and the rotor.

11. The electro-mechanical brake apparatus according to claim 9, wherein the reducer comprises two planet gears, the two planet gears are respectively arranged on two sides of the rotor along the axial direction of the brake motor, and the two planet gears are rotatably connected to the rotor through a same transmission shaft.

12. The electro-mechanical brake apparatus according to claim 11, wherein the planetary gear set of the reducer comprises an idler gear, the idler gear and the sun gear are respectively arranged on the two sides of the rotor along the axial direction of the brake motor, and the two planet gears are respectively configured to be in transmission connection to the idler gear and the sun gear.

13. The electro-mechanical brake apparatus according to any one of claims 1 to 12, wherein the feed mechanism comprises a lead screw and a screw nut, wherein
the lead screw is configured to rotate with the sun gear and drive the screw nut to move along an axial direction of the lead screw; and
the screw nut is configured to drive the friction plate towards or away from a brake disc of a vehicle.

14. An electro-mechanical brake system, comprising a brake caliper, a friction plate, and the electro-mechanical brake apparatus according to any one of claims 1 to 13, wherein the brake caliper is configured to install the friction plate and the electro-mechanical brake apparatus, and the electro-mechanical brake apparatus is configured to drive the friction plate towards or away from a brake disc of a vehicle.

15. A vehicle, comprising a brake pedal, a wheel, and a plurality of electro-mechanical brake systems according to claim 14, wherein
the brake pedal is configured to control at least one electro-mechanical brake system to drive a friction plate towards or away from a brake disc of the wheel.
